Europäisches Patentamt

European Patent Office

Office européen des brevets

(19)

(11) Publication number: **0 104 697**
**A1**

# (12) EUROPEAN PATENT APPLICATION

(21) Application number: **83201299.1**

(22) Date of filing: **08.09.83**

(51) Int. Cl.³: **F 16 L 23/02**

(30) Priority: **10.09.82 NL 8203540**

(43) Date of publication of application:
**04.04.84 Bulletin 84/14**

(84) Designated Contracting States:
**AT BE CH DE FR GB IT LI LU NL SE**

(71) Applicant: **WAVIN B.V.**
**Händellaan 251**
**NL-8031 EM Zwolle(NL)**

(72) Inventor: **Kiezebrink, Willem**
**9 Oelenveerstraat**
**NL-7771 BH Hardenberg(NL)**

(72) Inventor: **Offringa, Oege René**
**5 Bovenmaat**
**NL-7772 JE Hardenberg(NL)**

(74) Representative: **van der Veken, Johannes**
**Adriaan et al,**
**EXTERPATENT Willem Witsenplein 4**
**NL-2596 BK 's-Gravenhage(NL)**

(54) **Pipe part provided with a flange and pipe connection comprising such a pipe part.**

(57) The invention concerns a pipe part (1) coupled with a flange (5) by means of a flexible bar (6) engaging with axial clearance a groove (18) in the outer side of the pipe part and a groove (22) in the inner side of the flange, an annular sealing (7) being retained by a retaining ring (8) fixed in the inner side of the pipe part (1).

The pipe part (1) may be coupled to another pipe part by means of a tensile resistant connection.

The pipe part (1) is suitable for making a pipe connection with another pipe part provided with a flange.

EP 0 104 697 A1

- 1 -

PIPE PART PROVIDED WITH A FLANGE AND PIPE CONNECTION
COMPRISING SUCH A PIPE PART.

BACKGROUND OF THE INVENTION

The invention relates to a pipe part provided with a flange.

A pipe part of this kind provided with an integral flange is known in the art. A disadvantage of these pipe parts is that they are expensive to manufacture.

Also, interconnecting the flanges of such pipe parts by means of bolts to form a flange connection, generally requires fairly great accuracy to obtain a good pipe connection. The force with which the connecting bolts are tightened particularly determines the quality of the connection.

In addition, a connecting pipe part used to form a sleeve connection with a second pipe part frequently has to be connected to a pipe part provided with an integral flange, so that a connecting pipe part of this kind used to form the required connection also has to be provided with a flange.

## SUMMARY OF THE INVENTION

It is a main object of the present invention to provide a pipe part with a flange and which is very suitable for connection to another pipe part with a flange.

To this end, according to the invention, a loose flange connected to the pipe part in a tensile resistant manner bears an annular flange edge end portion, which projects or can project axially by its front face with respect to the front face of the pipe part.

By using a loose flange connected to the pipe part so as to be tensile resistant a suitable pipe part can always be provided with a flange whenever so required, while if such flange is not required it can be omitted.

Connecting a flange to a pipe part in a tensile resistant manner also provides the opportunity of ensuring that an annular flange edge end portion projects or can project axially by its front face with respect to the front face of the pipe part.

As a result, the flange of another pipe part will abut the end face of the projecting flange edge end portion, so that the front face of the pipe part lies on the inside with respect to the front face of the flange edge end portion. In this way, a very good seal can be obtained between the front face of the pipe part and the flange of the other pipe part, by means of an annular sealing means, because the distance between the same is determined by the axial difference between the front face of the pipe part and the front face of the projecting flange edge end portion, so that the sealing means can be compressed to a specific

amount.

Also, the force by which the front face of the annular flange edge end portion is pressed against the flange of the other pipe part does not affect the quality of the seal.

The pipe part is very advantageously connected to an annular sealing means extending over the front face of the pipe part, the maximum thickness of said sealing means being greater than the axial distance between the surface of the front face of the pipe part and the front face of the projecting flange edge end portion.

The advantage of this embodiment is a very good sealing by means of the annular sealing means, which bears against the front face of the pipe part and a front face of the flange of another pipe part without the forces exerted by bolts of a flange connection determining the compression of the sealing means.

Advantageously, the annular sealing means is retained in the inner side of the pipe part by means of a retaining ring, preferably a T-shaped retaining ring.

It is particularly advantageous for an internal groove of the loose flange to co-operate with a circumferentially interrupted annular retaining means which in turn engages an external groove in the pipe part the annular retaining means preferably lying with clearance in the external groove of the pipe part an/or the internal groove of the loose flange.

In this way it is possible to ensure that the front face of the flange edge end portion does not project with respect to the front face of the pipe part during transport, and that in a completed pipe connection formed with a pipe part according to the invention, the flange edge end portion projects outwardly by its front face with respect to the front face of the pipe part.

## SURVEY OF THE DRAWINGS

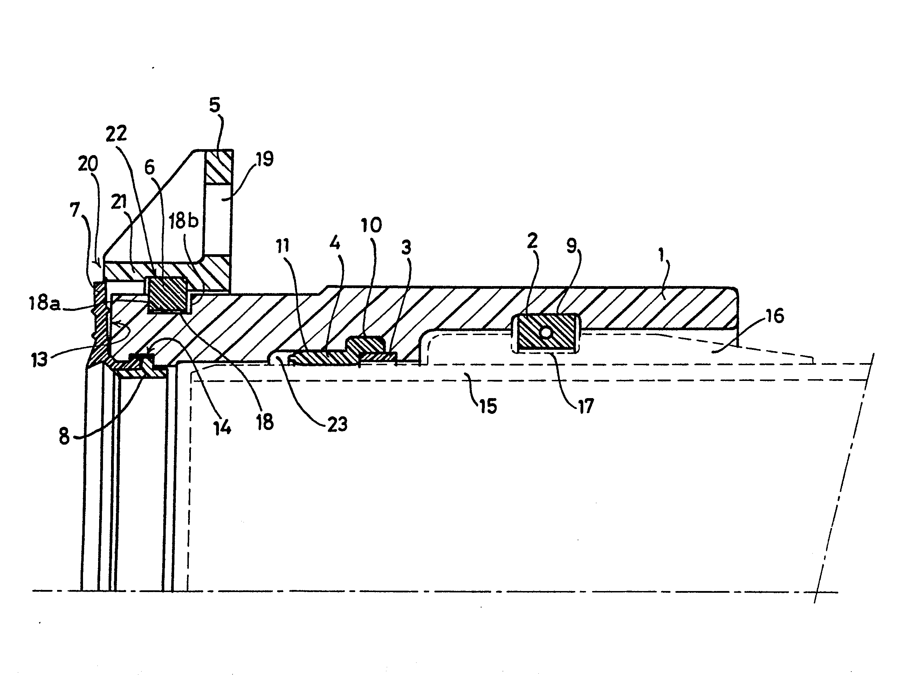

The drawing is a cross-section through a pipe part according to the invention.

## DESCRIPTION OF THE PREFERRED EMBODIMENTS

In the drawing a plastic pipe part, more particularly a pipe part of thermoplastic material such as polyvinylchloride or polyethylene, comprises an external groove 18 in which a circumferentially interrupted annular plastic retaining member 6 is received with clearance between the outer boundary walls 18a and 18b of the groove.

A flange 5 provided with a cylindrical edge portion 21 has an internal groove 22, also receiving the circumferentially interrupted annular retaining member 6 with clearance.

The tensile resistant connection between the flange 5 and the pipe part 1 is formed by pushing the flange 5 from the outside over the interrupted retaining member 6, which is usually in the form of a plastic bar material interrupted at a point of its circumference.

The flange 5 is provided with apertures 19 for the passage of bolts to connect with a flange of another pipe part (not shown).

On its front face 13 the pipe part 1 also bears an annular sealing means 7 being retained on the inner side of the pipe

0104697

part 1 by means of a T-shaped retaining ring 8, disposed in a groove 14.

In the outermost positon, the annular end part 21 of the flange edge projects with respect to the front face 13 of the pipe part 1. It is thus possible to achieve optimum sealing by providing an annular sealing means 7 against the front face 13 of the pipe part 1, because the forces exerted by the connecting bolts of a flange connection do not determine the compression of the sealing means.

Pipe part 1 is also provided with an inner groove 10, 11 to receive a pipe sealing means 4, a front part 10 thereof being retained by another retaining ring 3, while the free end portion 11 of the pipe sealing means 4 is received in a groove chamber 23.

Pipe part 1 is further provided with another internal groove 9 to receive an annular pipe coupling means 2, which can be received in the said inner groove 9 via a bore in the wall.

The annular pipe coupling means 2, usually in the form of a plastic bar material, e.g. of polythylene, may engage a groove 17 in a portion 16 glued upon a male pipe part 15.

The pipe part 1 and the male pipe part 15 advantageously consist of a thermoplastic. The loose flange 5 advantageously consists of metal or reinforced thermosetting plastic.

WHAT IS CLAIMED IS:

1. A pipe part provided with a flange, wherein a loose flange connected to the pipe part in a tensile resistant manner bears an annular flange edge end portion, which projects or can project axially by its front face with respect to the front face of the pipe part (13;1).

2. A pipe part according to claim 1, wherein the pipe part is connected to an annular sealing means extending over the front face of the pipe part, the maximum thickness of said sealing means being larger than the axial distance between the surface of the front face of the pipe part and the front face of the projecting flange edge end portion (20;21).

3. A pipe part according to claim 1 or 2, whereinthe annular sealing means is retained by a retaining ring, preferably a T-shaped retaining ring.

4. A pipe part according to claim 1 - 3, wherein an internal groove of the loose flange co-operates with a circumferentially interrupted annular retaining means which in turn engages an external groove in the pipe part (18;1).

5. A pipe part according to claim 4, wherein the annular retaining means is received with clearance in an external groove in the pipe part and/or an internal groove (22) of the loose flange (5).

6.      A pipe part according to claim 1, said pipe part additionally comprising an inner groove to receive a pipe sealing means (4).

7.      A pipe part according to claim 1, which pipe part comprises another inner groove to receive an annular pipe coupling means (2).

8.      A pipe connection comprising two pipe parts each provided with a flange, one of the pipe parts being a pipe part as claimed in any one or several of the preceding claims.

1/1

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 861 722 (KENYON)<br><br>* Figures *<br><br>--- | 1,4,5,<br>6,8 | F 16 L 23/02 |
| X | DE-C- 931 325 (VACINO)<br>* Figure 5 *<br><br>--- | 1,2,8 | |
| X | FR-A-2 354 504 (PONT-A-MOUSSON)<br><br>* Page 3, lignes 1-21; figure 3 *<br><br>--- | 1,2,3,<br>8 | |
| X | FR-A-2 151 958 (VICTAULIC COMP.<br>OF AMERICA)<br>* Figures *<br><br>----- | 1,2,4,<br>5,6,8 | |

TECHNICAL FIELDS
SEARCHED (Int. Cl. ³)

F 16 L

The present search report has been drawn up for all claims

| Place of search | Date of completion of the search | Examiner |
|---|---|---|
| THE HAGUE | 15-12-1983 | HUBEAU M.G. |